# EUROPEAN PATENT APPLICATION

(11) **EP 4 561 223 A1**
(43) Date of publication of application: **28.05.2025**
(21) Application number: 23842451.9
(22) Date of filing: 24.07.2023
(51) Int. Cl.: H04W 72/04

(54) **INFORMATION PROCESSING METHOD AND APPARATUS, AND READABLE STORAGE MEDIUM**

(30) Priority: 22.07.2022 CN 202210870443
(71) Applicant: Datang Mobile Communications Equipment Co., Ltd., Beijing 100085 (CN)
(72) Inventor: ZHAO, Yue, Beijing 100085 (CN); GAO, Xuejuan, Beijing 100085 (CN); SI, Qianqian, Beijing 100085 (CN); XING, Yanping, Beijing 100085 (CN)
(74) Representative: Maiwald GmbH
(86) International application number: PCT/CN2023/108878
(87) International publication number: WO 2024/017389

(57) **Abstract**

An information processing method, a device and a readable storage medium are provided, which relate to the field of communication technology, so as to flexibly utilize transmission resources for transmission. The method includes: a terminal determines the valid resource type of at least one transmission scheduled by a network device according to target information, where the target information includes: resource type indication information; and/or type information of the transmission resource of the first transmission in at least one transmission scheduled by the network device.

## Description

### CROSS REFERENCE OF RELATED APPLICATION

The present disclosure claims the priority of Chinese patent application No. 202210870443.0 filed on July 22, 2022, which is incorporated herein by reference in its entirety.

### TECHNICAL FIELD

The present disclosure relates to the field of communication technology, and in particular to an information processing method, device and readable storage medium.

### BACKGROUND

In order to solve the coverage, delay and capacity problems of uplink transmission in TDD mode, the technology of non-overlapping sub-band full duplex is proposed, that is, the frequency domain resources are divided into at least one sub-band, which do not overlap with each other, and the uplink and downlink frequency domain resources are located in different sub-bands. Non-overlapping sub-band full duplex can also be referred to as sub-band full duplex. However, according to the protocol in the relevant technology, the transmission resources of the uplink sub- band or the downlink sub-band cannot be transmitted flexibly.

### SUMMARY

The embodiments of the present disclosure provide an information processing method, an apparatus, and a readable storage medium to flexibly utilize transmission resources for transmission.

In a first aspect, an information processing method is provided in the embodiment of the present disclosure, applied to a terminal, including:
determining, according to target information, a valid resource type of at least one transmission scheduled by a network device, where the target information includes:
indication information of a resource type, and/or
type information of a transmission resource of a first transmission in the at least one transmission scheduled by the network device.

Optionally, the at least one transmission includes:
physical uplink shared channel (PUSCH) retransmission;
physical uplink control channel (PUCCH) retransmission;
physical downlink shared channel (PDSCH) retransmission;
configured grant Type 1 PUSCH transmission;
configured grant Type 2 PUSCH transmission;
transport block (TB) transmitted across at least one PDSCH or PUSCH.

Optionally, the type of the transmission resource includes:
a first type, where the first type of resource includes a slot or symbol corresponding to an uplink (UL) sub-band and/or a slot or symbol corresponding to a downlink (DL) sub-band;
a second type, where the second type of resource includes a flexible symbol;
a third type, where the third type of resource includes all uplink slots or symbols within a frequency domain rang of a bandwidth part (BWP) or a carrier or a band, and/or all downlink slots or symbols within a frequency domain rang of a BWP or a carrier or a band.

Optionally, the target information includes resource type indication information; and the determining the valid resource type of at least one transmission scheduled by the network device according to the target information includes:
taking a type of transmission resource indicated by the resource type indication information as the valid resource type, where the type of transmission resource indicated by the resource type indication information includes at least two types or a combination of the first type, the second type and the third type.

Optionally, the target information includes the type information of the transmission resource of the first transmission in the at least one transmission scheduled by the network device; and the determining the valid resource type of at least one transmission scheduled by the network device according to the target information includes:
determining, according to the type information of the transmission resource of the first transmission in the at least one transmission, the valid resource type corresponding to other transmissions.

Optionally, the target information includes resource type indication information and the type information of transmission resource of the first transmission in at least one transmission scheduled by the network device; and the determining the valid resource type of at least one transmission scheduled by the network device according to the target information includes:
determining, according to the type information of the transmission resource of the first transmission in the at least one transmission and the resource type indication information, the valid resource type corresponding to other transmissions.

Optionally, the determining the valid resource types corresponding to other transmissions according to the type information of the transmission resource of the first transmission in the at least one transmission includes:
the valid resource types corresponding to the other transmissions including the type of transmission resource of the first transmission in the at least one transmission.

Optionally, the determining the valid resource types corresponding to other transmissions according to the type information of the transmission resource of the first transmission in the at least one transmission and the resource type indication information includes:
determining the valid resource type corresponding to other transmissions according to a bit state corresponding to the resource type indication information and the type information of the transmission resource of the first transmission.

Optionally, the resource type indication information is carried through a radio resource control (RRC) configuration, or indicated through a media access control (MAC) control element (CE), or carried in an uplink grant (UL grant) for scheduling transmission, or carried in a DCI for scheduling uplink/downlink transmission.

In a second aspect, an information processing method is provided in the embodiment of the present disclosure, applied to a network device, including:
determining a valid resource type for at least one scheduled transmission;
determining target information;
where the target information includes:
indication information of a resource type, and/or
type information of a transmission resource of a first transmission in the at least one transmission scheduled by the network device.

Optionally, the at least one transmission includes:
physical uplink shared channel (PUSCH) retransmission;
physical uplink control channel (PUCCH) retransmission;
physical downlink shared channel (PDSCH) retransmission;
configured grant Type 1 PUSCH transmission;
configured grant Type 2 PUSCH transmission;
transport block (TB) transmitted across at least one PDSCH or PUSCH.

Optionally, the type of the transmission resource includes:
a first type, where the first type of resource includes a slot or symbol corresponding to an uplink (UL) sub-band and/or a slot or symbol corresponding to a downlink (DL) sub-band;
a second type, where the second type of resource includes a flexible symbol;
a third type, where the third type of resource includes all uplink slots or symbols within a frequency domain rang of a bandwidth part (BWP) or a carrier or a band, and/or all downlink slots or symbols within a frequency domain rang of a BWP or a carrier or a band.

Optionally, the determining the valid resource type for at least one scheduled transmission includes:
taking at least two types or a combination of the first type, the second type and the third type as the valid resource type;
the determining the target information includes:
determining the target information according to the valid resource type, where the target information includes resource type indication information configured to indicate the valid resource type.

Optionally, the determining the valid resource type for at least one scheduled transmission includes:
determining a type of the transmission resource for the first transmission of the at least one transmission;
determining the valid resource type according to the type of the transmission resource of the first transmission of the at least one transmission;
the determining target information includes:
determing the target information according to the type of the transmission resource of the first transmission in the at least one transmission, and the target information includes type information of the transmission resource of the first transmission in the at least one scheduled transmission.

Optionally, the determining the valid resource type for at least one scheduled transmission includes:
determining a type of transmission resource for a first transmission of the at least one transmission;
determining a selectable type set according to the type of the transmission resource of the first transmission in the at least one transmission, where the selectable type set includes the type of the transmission resource of the first transmission in the at least one transmission;
determining the valid resource type according to the selectable type set;
the determining the target information includes:
   determining the target information based on the type of transmission resources of the first transmission in the at least one transmission and the valid resource type, and the target information includes: resource type indication information configured to indicate the valid resource type, and type information of the transmission resources of the first transmission in the at least one scheduled transmission.

Optionally, the method further includes:
sending the target information to the terminal.

In a third aspect, an information processing apparatus is provided in the embodiment of the present disclosure, applied to a terminal, including:
a determining unit, configured to determine, according to target information, a valid resource type of at least one transmission scheduled by a network device, where the target information includes:
indication information of a resource type, and/or
type information of a transmission resource of a first transmission in the at least one transmission scheduled by the network device.

In a fourth aspect, an information processing apparatus is provided in the embodiment of the present disclosure, applied to a terminal, including:
a first determining unit, configured to determine a valid resource type for at least one scheduled transmission;
a second determining unit, configured to determine a valid resource type for at least one scheduled transmission;
determining target information;
where the target information includes:
   indication information of a resource type, and/or
   type information of a transmission resource of a first transmission in the at least one transmission scheduled by the network device.

In a fifth aspect, an information processing apparatus is provided in the embodiment of the present disclosure, applied to a terminal, including: a memory, a transceiver, and a processor:
the memory is configured to store a computer program; the transceiver is configured to send and receive data under a control of the processor; and the processor is configured to read the computer program in the memory to perform:
determining, according to target information, a valid resource type of at least one transmission scheduled by a network device, where the target information includes:
   indication information of a resource type, and/or
   type information of a transmission resource of a first transmission in the at least one transmission scheduled by the network device.

**In** a sixth aspect, an information processing apparatus is provided in the embodiment of the present disclosure, applied to a terminal, including: a memory, a transceiver, and a processor:
the memory is configured to store a computer program; the transceiver is configured to send and receive data under a control of the processor; and the processor is configured to read the computer program in the memory to perform:
determining a valid resource type for at least one scheduled transmission;
determining target information;
where the target information includes:
   indication information of a resource type, and/or
   type information of a transmission resource of a first transmission in the at least one transmission scheduled by the network device.

**In** a seventh aspect, a processor-readable storage medium is provided in the embodiment of the present disclosure, storing a computer program, where the computer program is configured to cause the processor to perform the method hereinabove.

**In** the embodiment of the present disclosure, the terminal can determine the valid resource type of at least one transmission scheduled by the network device according to the target information, and thus can determine the corresponding transmission resource for transmission according to the valid resource type. It can be seen that the scheme of the embodiment of the present disclosure can flexibly use the transmission resources for transmission.

### BRIEF DESCRIPTION OF THE DRAWINGS

FIG.1 is a first flowchart of an information processing method provided by an embodiment of the present disclosure;
FIG.2 is a second flowchart of an information processing method provided by an embodiment of the present disclosure;
FIG.3 is a first structural diagram of an information processing apparatus provided by an embodiment of the present disclosure;
FIG.4 is a second structural diagram of an information processing apparatus provided by an embodiment of the present disclosure;
FIG.5 is a third structural diagram of an information processing apparatus provided by an embodiment of the present disclosure; and
FIG.6 is a fourth structural diagram of an information processing apparatus provided in an embodiment of the present disclosure.

### DETAILED DESCRIPTION

Ithe present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after are in an "or" relationship.

The term "a plurality of" of the present disclosure refers to two or more than two, and other quantifiers are similar thereto.

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without creative work are within the scope of protection of the present disclosure.

In sub-band full-duplex mode, for dynamic scheduling of a single transmission, the base station can flexibly schedule the transmission on the uplink (UL) sub-band by controlling the time domain position of the downlink control information (DCI) of the scheduled transmission and the offset value between the DCI and the transmission. At the same time, in order to schedule the legacy user equipment (UE), the base station configures the time domain position corresponding to the uplink sub-band as downlink (DL). However, according to the protocol in the relevant technology, the transmission resources of the uplink sub- band or downlink sub-band cannot be used for multi-slot transmission or retransmission.

The embodiments of the present disclosure provide an information processing method and device for flexibly utilizing transmission resources for transmission.

Among them, the method and the device are based on the same application concept. Since the method and the device solve the problem in a similar principle, the implementation of the device and the method can refer to each other, and the repeated parts will not be repeated.

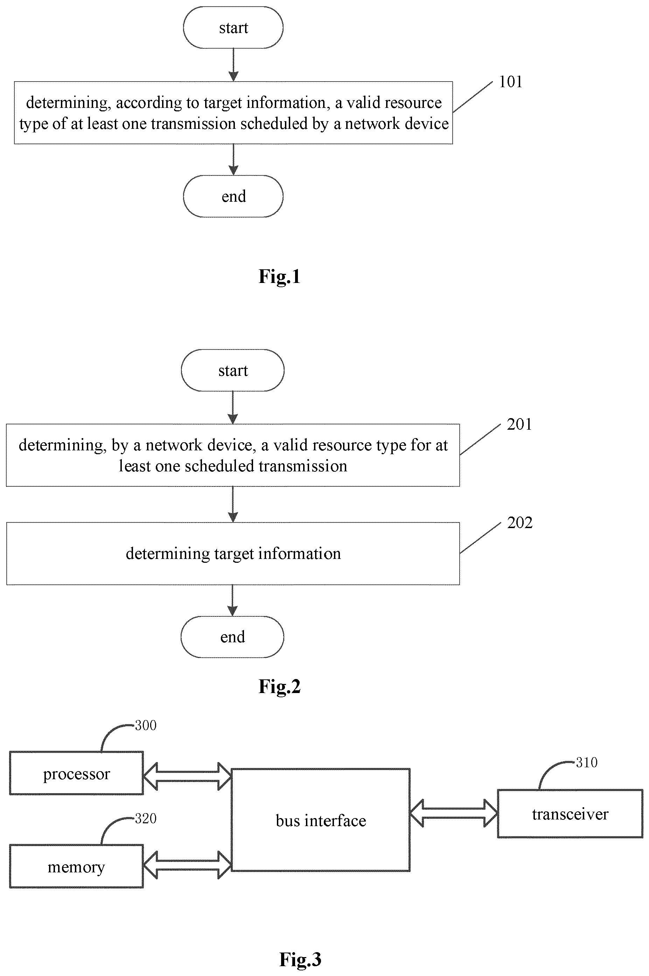

Referring to FIG. 1, FIG. 1 is a flow chart of an information processing method provided by an embodiment of the present disclosure, and as shown in FIG. 1, the method includes the following steps:
Step 101: determining, according to target information, a valid resource type of at least one transmission scheduled by a network device, wherein the target information includes:
indication information of a resource type, and/or
type information of a transmission resource of a first transmission in the at least one transmission scheduled by the network device.

The at least one transmission scheduled by the network device includes at least one transmission scheduled by downlink control information (DCI) or radio resource control (RRC) signaling. The at least one transmission includes one or more of the following:
physical uplink shared channel (PUSCH) retransmission;
physical uplink control channel (PUCCH) retransmission;
physical downlink shared channel (PDSCH) retransmission;
configured grant Type 1 PUSCH transmission;
configured grant Type 2 PUSCH transmission;
transport block (TB) transmitted across at least one PDSCH or PUSCH.

Optionally, the type of the transmission resource includes:
a first type, where the first type of resource includes a slot or symbol corresponding to an uplink (UL) sub-band and/or a slot or symbol corresponding to a downlink (DL) sub-band;
a second type, where the second type of resource includes a flexible symbol;
a third type, where the third type of resource includes all uplink slots or symbols within a frequency domain rang of a bandwidth part (BWP) or a carrier or a band, and/or all downlink slots or symbols within a frequency domain rang of a BWP or a carrier or a band.

For PUSCH transmission or PUCCH transmission, the first type of resource includes slots or symbols corresponding to the UL sub-band, the second type of resource includes flexible symbols, and the third type of resource includes all uplink slots or symbols within the BWP or carrier or band frequency domain;

For PDSCH transmission, the first type of resource includes slots or symbols corresponding to the DL sub-band, the second type of resource includes flexible symbols, and the third type of resource includes all downlink slots or symbols within the BWP or carrier or band frequency domain.

The resource type indication information is used to indicate information about the valid resource type, and the specific type or type combination is determined through the resource type indication information, or is used to indicate the bit state of the valid resource type, so as to determine which type or type combination can be used as a valid resource type through the bit state.

The resource type indication information is carried through RRC signaling, or indicated through MAC CE, or carried in an uplink grant (UL grant) in a Medium Access Control Random Access Response (MAC RAR), or carried in a DCI for scheduling uplink/downlink transmission.

For example, for a transmission scheduled by a MAC RAR UL grant, the resource type indication information may be indicated by a reserved bit in the MAC RAR UL grant, or by other fields/bits in the DCI format 0_0 scrambled by the MAC RAR UL grant or the Temporary Cell Radio Network Temporary Identifier (TC -RNTI), such as MAC RAR Frequency hopping flag in UL grant, frequency domain resource allocation (FDRA)/ time domain resource allocation (time domain resource allocation, TD RA), etc.; or, it may also be indicated by a status of an existing field in MAC RAR UL grant or TC-RNTI scrambled DCI format 0_0.

In the embodiment of the present disclosure, the terminal may determine the valid resource type in the following optional manner.

Option 1: Target information includes resource type indication information

In such case, the transmission resource indicated by the resource type indication information is used as the valid resource type, where the type of the transmission resource indicated by the resource type indication information includes at least two types or a combination of types among the first type, the second type and the third type. Specifically, the valid resource type can be selected from the following combinations:
the first type;
the second type;
The third type;
the first type and the second type;
the first type and the third type;
the second type and the third type;
the first type, the second type and the third type.

For the above situations, the resource type indication information may indicate the above different resource types or their combinations through different bit states.

For example, the resource type indication information indicates the above information through 3 bits, such as 000 is used to indicate the first type; 001 is used to indicate the second type; 010 is used to indicate the third type, and so on.

For example, the resource type indication information indicates the above information through 1 bit, 0 is used to indicate the first type; 1 is used to indicate the first type, the second type and the third type, and vice versa.

Option 2: the target information includes the type information of the transmission resource of the first transmission in at least one transmission scheduled by the network device

Here, the type information of the transmission resource of the first transmission in the at least one transmission can be mainly reflected by the location information of the transmission resource of the first transmission in the at least one transmission. For example, if it is located on a resource of the first type, the type information of the transmission resource can be the first type. If it is located on a resource of the second type, the type information of the transmission resource can be the second type. If it is located on a resource of the third type, the type information of the transmission resource can be the third type.

In this case, the valid resource types corresponding to other transmissions are determined according to the type information of the transmission resource of the first transmission in the at least one transmission. The other transmissions refer to the transmissions other than the first transmission in the at least one transmission. The valid resource types corresponding to the other transmissions include the type of the transmission resource of the first transmission in the at least one transmission.

For example, the terminal determines the target type of the transmission resource of the first transmission among the multiple transmissions according to the type information of the transmission resource of the first transmission. The terminal determines the valid resource type according to the target type.

The target type may be one of the first type, the second type, and the third type. When the location of the transmission resource of the first transmission is on the resource of the first type, the target type is the first type; or, when the location of the transmission resource of the first transmission is on the resource of the second type, the target type is the second type; or, when the location of the transmission resource of the first transmission is on the resource of the third type, the target type is the third type.

Specifically, the network device may use the first target type as the valid resource type, or use the first target type and the second target type as the valid resource type, where the first target type is any one of the first type, the second type and the third type, and the first target type is consistent with the target type, and the second target type is one or more types of the first type, the second type and the third type except the first target type.

Specifically, when the first target type is the first type, any one of the following is determined to be a valid resource type: the first type, the first type and the second type, the first type, the second type and the third type, the first type and the third type;

In the case where the first target type is the second type, determining any one of the following as a valid resource type: the second type, the second type and the third type, the first type, the second type and the third type, the second type and the first type;

In the case where the first target type is the third type, any one of the following is determined to be a valid resource type: the third type, the third type and the second type, the first type, the second type and the third type, the third type and the first type.

The specific type or combination of the above valid resource types can be agreed upon in advance in the protocol.

In the above situation, when the network configures available slot counting (availableSlotCounting), the resources corresponding to the valid resource type are used as available symbols or slots (available symbol/slot).

Option 3: the target information includes resource type indication information and type information of the transmission resource of the first transmission in at least one transmission scheduled by the network device

The terminal determine the valid resource type corresponding to other transmissions according to the type information of the transmission resource of the first transmission in the at least one transmission and the resource type indication information. Specifically, the terminal may determine the valid resource type corresponding to other transmissions according to the bit state corresponding to the resource type indication information and the type information of the transmission resource of the first transmission.

Specifically, the terminal determines the target type of the transmission resource of the first transmission among the multiple transmissions according to the type information of the transmission resource of the first transmission. The terminal determines the valid resource types of multiple transmissions scheduled by the network device according to the bit state of the resource type indication information and the target type.

For example, the terminal determines the target type of the transmission resource of the first transmission among the multiple transmissions according to the type information of the transmission resource of the first transmission. The terminal determines the valid resource types of multiple transmissions scheduled by the network device according to the resource type indication information and the target type.

The target type may be one of the first type, the second type, and the third type. When the location of the transmission resource of the first transmission is on the resource of the first type, the target type is the first type; or, when the location of the transmission resource of the first transmission is on the resource of the second type, the target type is the second type; or, when the location of the transmission resource of the first transmission is on the resource of the third type, the target type is the third type.

In this case, according to the bit state of the resource type indication information, the first target type is used as the valid resource type, or the first target type and the second target type are used as the valid resources; where the first target type is any one of the first type, the second type and the third type, and the first target type is consistent with the target type, and the second target type is one or more of the first type, the second type and the third type except the first target type.

The resource type indication information can be indicated by 1 bit, such as 0, 1, etc.; or by 2 bits, such as 00, 01, 10, 11, etc. Different types or combinations thereof can be indicated by different bit states. In this way, the flexibility of the indication information can be improved.

### 3.1 Resource type indication information is indicated by 1 bit

The bit states corresponding to the resource type indication information are respectively a first bit state and a second bit state. The first bit state and the second bit state can be 0 or 1 respectively, or vice versa, or can be expressed in other ways.

Specifically: if the first target type is the first type, when the resource type indication information is in the first bit state, the first type, or the first type and the second type, or the first type and the third type, or the first type, the second type and the third type are used as valid resource types; or, when the resource type indication information is in the second bit state, the first type, the second type and the third type, or the first type and the second type, or the first type and the third type, or the first type are used as valid resource types; or
if the first target type is the second type, when the resource type indication information is in the first bit state, the second type, or the second type and the third type, or the second type and the first type, or the first type, the second type and the third type are used as valid resource types; or, when the resource type indication information is in the second bit state, the first type, the second type and the third type, or the second type and the first type, or the second type and the third type, or the second type are used as valid resource types; or
if the first target type is the third type, when the resource type indication information is in the first bit state, the third type, or the second type and the third type, or the first type and the third type, or the first type, the second type and the third type are used as valid resource types; or, when the resource type indication information is in the second bit state, the first type, the second type and the third type, or the third type and the first type, or the second type and the third type, or the third type are used as valid resource types.

### 3.2 Resource type indication information is indicated by 2 bits

The bit states corresponding to the resource type indication information are the third bit state, the fourth bit state, the fifth bit state and the sixth bit state respectively.

The third bit state, the fourth bit state, the fifth bit state and the sixth bit state can be selected from 00, 01, 10, 11 respectively, and are different from each other; or, can also be expressed in other ways.

If the first target type is the first type, when the resource type indication information is in the third bit state, the first type is used as a valid resource type; when the resource type indication information is in the fourth bit state, the first type and the second type are used as valid resource types; when the resource type indication information is in the fifth bit state, the first type, the second type and the third type are used as valid resource types; when the resource type indication information is in the sixth bit state, the first type and the third type are used as valid resource types; or
if the first target type is the second type, when the resource type indication information is in the third bit state, the second type is used as a valid resource type; when the resource type indication information is in the fourth bit state, the first type and the second type are used as valid resource types; when the resource type indication information is in the fifth bit state, the first type, the second type and the third type are used as valid resource types; when the resource type indication information is in the sixth bit state, the second type and the third type are used as valid resource types; or
if the first target type is the third type, when the resource type indication information is in the third bit state, the third type is used as a valid resource type; when the resource type indication information is in the fourth bit state, the third type and the second type are used as valid resource types; when the resource type indication information is in the fifth bit state, the first type, the second type and the third type are used as valid resource types; when the resource type indication information is in the sixth bit state, the third type and the first type are used as valid resource types.

In the above situation, when the network configures availableSlotCounting, the resources corresponding to the valid resource type are used as available symbol/slot.

After determining the valid resource type, the terminal may determine whether to use the resources corresponding to the valid resource type for transmission according to the valid resource type and/or other information (such as instructions or configuration information on the network side).

In the embodiment of the present disclosure, the terminal can determine the valid resource type of at least one transmission scheduled by the network device according to the target information, and thus can determine the corresponding transmission resource for transmission according to the valid resource type. It can be seen that the scheme of the embodiment of the present disclosure can flexibly use the transmission resources for transmission.

Referring to FIG. 2, FIG. 2 is a flow chart of an information processing method provided by an embodiment of the present disclosure. As shown in FIG. 2, the method includes the following steps:
Step 201: determining, by a network device, a valid resource type for at least one scheduled transmission.

As mentioned above, specifically, Optionally, the at least one transmission includes:
physical uplink shared channel (PUSCH) retransmission;
physical uplink control channel (PUCCH) retransmission;
physical downlink shared channel (PDSCH) retransmission;
configured grant Type 1 PUSCH transmission;
configured grant Type 2 PUSCH transmission;
transport block (TB) transmitted across at least one PDSCH or PUSCH.

The type of the transmission resource includes:
a first type, where the first type of resource includes a slot or symbol corresponding to an uplink (UL) sub-band and/or a slot or symbol corresponding to a downlink (DL) sub-band;
a second type, where the second type of resource includes a flexible symbol;
a third type, where the third type of resource includes all uplink slots or symbols within a frequency domain rang of a bandwidth part (BWP) or a carrier or a band, and/or all downlink slots or symbols within a frequency domain rang of a BWP or a carrier or a band.

For PUSCH transmission or PUCCH transmission, the first type of resource includes slots or symbols corresponding to the UL sub-band, the second type of resource includes flexible symbols, and the third type of resource includes all uplink slots or symbols within the BWP or carrier or band frequency domain;

For PDSCH transmission, the first type of resource includes slots or symbols corresponding to the DL sub-band, the second type of resource includes flexible symbols, and the third type of resource includes all downlink slots or symbols within the BWP or carrier or band frequency domain.

The meaning of at least one transmission and the more included content, the explanation of the valid resource type, etc. can refer to the description of the aforementioned method embodiment.

Step 202: determining target information;
where the target information includes:
indication information of a resource type, and/or
type information of a transmission resource of a first transmission in the at least one transmission scheduled by the network device.

In the embodiment of the present disclosure, the network device may determine the valid resource type in the following optional manner.

Optional 1: use at least two types of the first type, the second type and the third type or one of the type combination as the valid resource type. Accordingly, in step 202, the network device determines the target information according to the valid resource type, and the target information includes resource type indication information configured to indicate the valid resource type.

The valid resource type may be selected from:
the first type;
the second type;
The third type;
the first type and the second type;
the first type and the third type;
the second type and the third type;
the first type, the second type and the third type.

In order to ensure smooth communication between the terminal and the network device, the network device may also send the target information to the terminal. In practical applications, the resource type indication information indicates the above information through 3 bits, such as 000 is used to indicate the first type; 001 is used to indicate the second type; 010 is used to indicate the third type, etc. For example, the resource type indication information indicates the above information through 1 bit, 0 is used to indicate the first type; 1 is used to indicate the first type, the second type and the third type, and vice versa.

Option 2: The network device determines the type of the transmission resource of the first transmission in the at least one transmission, and determines the valid resource type according to the type of the transmission resource of the first transmission in the at least one transmission. Accordingly, in step 202, the network device determines the target information according to the type of the transmission resource of the first transmission in the at least one transmission, and the target information includes the type information of the transmission resource of the first transmission in the at least one transmission scheduled.

For example, the network device determines the target type of the transmission resource of the first transmission among the multiple transmissions. The network device determines the valid resource type according to the target type and the mapping relationship. The mapping relationship may be pre-set in the protocol. The mapping relationship may be a mapping relationship between a resource type and an valid resource type, where the resource type may include a first type, a second type, a third type, etc.

The target type may be one of the first type, the second type, and the third type. In the correspondence between resource types and valid resource types, a valid resource type corresponding to a resource type may be one or more types or a combination of types.

According to the corresponding relationship and the target type, the network device uses the first target type as the valid resource type, or uses the first target type and the second target type as the valid resource type. The first target type is any one of the first type, the second type and the third type, and the first target type is consistent with the target type, and the second target type is one or more types of the first type, the second type and the third type except the first target type; the target type is the type of the transmission resource of the first transmission in the at least one transmission.

When the above-mentioned target types are the first type, the second type and the third type respectively, the corresponding valid resource type is a specific type or a combination of types, that is, the mapping relationship between the resource type and the valid resource type can be pre-agreed in the protocol.

For example, when the target type is the first type, the network device determines any one of the following as a valid resource type: the first type, the first type and the second type, the first type, the second type and the third type, the first type and the third type;

In the case where the target type is the second type, the network device determines any one of the following as a valid resource type: the second type, the second type and the third type, the first type, the second type and the third type, the second type and the first type;

In the case where the target type is the third type, the network device determines any one of the following as a valid resource type: the third type, the third type and the second type, the first type, the second type and the third type, the third type and the first type.

In order to ensure smooth communication between the terminal and the network device, the network device sends the information of the transmission resource of the first transmission to the terminal. The information of the transmission resource of the first transmission mainly refers to the location information of the transmission resource of the first transmission among multiple transmissions. The information of the transmission resource of the first transmission is used to indicate the target type to the terminal. The terminal determines the valid resource type according to the above-mentioned protocol provisions and the information of the transmission resource of the first transmission.

In the above situation, when the network configures availableSlotCounting, the resources corresponding to the valid resource type are used as available symbol/slot.

Optional 3: The network device determines the type of the transmission resource of the first transmission in the at least one transmission. The network device determines an selectable type set according to the type of the transmission resource of the first transmission in the at least one transmission, the selectable type set including the type of the transmission resource of the first transmission in the at least one transmission, and determines the valid resource type according to the selectable type set.

The selectable type set may be predefined in the protocol or semi-statically configured by RRC. Accordingly, in step 202, the network device determines the target information according to the type of the transmission resource of the first transmission in the at least one transmission and the valid resource type, and the target information includes: resource type indication information configured to indicate the valid resource type, and type information of the transmission resource of the first transmission in the at least one transmission scheduled.

For example, the network device determines a target type of a transmission resource of a first transmission among the multiple transmissions, determines a set of optional resource types based on the target type, and selects the valid resource type from the set of optional resource types.

The target type may be one of the first type, the second type, and the third type. The selectable resource type set includes at least one type or a combination of types mentioned above.

The network device uses the first target type as the valid resource type, or uses the first target type and the second target type as the valid resource types, and determines a bit state of resource type indication information.

The first target type is any one of the first type, the second type and the third type, and the first target type is consistent with the target type, and the second target type is one or more of the first type, the second type and the third type except the first target type; where the target type is the type of the transmission resource of the first transmission in the multiple transmissions. The resource type indication information is used to indicate which type of the selectable resource type set the valid resource type is.

When there are two types of combinations in the selectable resource type set, the resource type indication information is indicated by 1 bit, and the corresponding bit states are the first bit state and the second bit state, respectively. If the first target type is the first type, when the resource type indication information is in the first bit state, the network device uses the first type, or the first type and the second type, or the first type and the third type, or the first type, the second type, and the third type as a valid resource type; or, when the resource type indication information is in the second bit state, the network device uses the first type, the second type, and the third type, or the first type and the second type, or the first type and the third type, or the first type as a valid resource type; or
if the first target type is the second type, when the resource type indication information is in the first bit state, the network device uses the second type, or the second type and the third type, or the second type and the first type, or the first type, the second type and the third type as a valid resource type; or, when the resource type indication information is in the second bit state, the network device uses the first type, the second type and the third type, or the second type and the first type, or the second type and the third type, or the second type as a valid resource type; or
if the first target type is the third type, when the resource type indication information is in the first bit state, the network device uses the third type, or the second type and the third type, or the first type and the third type, or the first type, the second type and the third type as a valid resource type; or, when the resource type indication information is in the second bit state, the network device uses the first type, the second type and the third type, or the third type and the first type, or the second type and the third type, or the third type as a valid resource type.

When there are 4 types or type combinations in the selectable resource type set, the resource type indication information is indicated by 2 bits, and the corresponding bit states are respectively the third bit state, the fourth bit state, the fifth bit state and the sixth bit state. Among them, the third bit state, the fourth bit state, the fifth bit state and the sixth bit state can be selected from 00, 01, 10, 11, respectively, and can be different from each other; or, they can also be represented by other methods. The network device uses the first type or the second type or the third type as a valid resource type, and the bit state of the valid resource type is the third bit state; or, the network device uses the first type and the second type, or the third type and the second type as valid resource types, and the bit state of the valid resource type is the fourth bit state; or, the network device uses the first type, the second type and the third type as valid resource types, and the bit state of the valid resource type is the fifth bit state; or, the network device uses the first type and the third type, or the second type and the third type as valid resource types, and the bit state of the valid resource type is the sixth bit state.

In order to ensure smooth communication between the terminal and the network device, the network device sends resource type indication information and information about the first transmission resource to the terminal. The resource type indication information is used to indicate the bit state of the selectable resource type set. The information about the first transmission resource mainly refers to the location information of the first transmission resource among multiple transmissions, which is used to indicate the target type information. The terminal determines the valid resource type according to the resource type indication information and the information about the first transmission resource transmitted by the terminal.

In the above situation, when the network configures availableSlotCounting, the resources corresponding to the valid resource type are used as available symbol/slot.

In the embodiment of the present disclosure, the terminal can determine the valid resource type of at least one transmission scheduled by the network device according to the target information, and thus can determine the corresponding transmission resource for transmission according to the valid resource type. It can be seen that the scheme of the embodiment of the present disclosure can flexibly use the transmission resources for transmission.

The specific implementation process of the information processing method of the embodiment of the present disclosure is described in detail below in combination with different embodiments.

According to the protocols in the relevant technology, uplink sub-band transmission resources cannot be used for repeated PUSCH transmission, configured grant Type 1, Type 2 PUSCH, or TB transmission across at least one PDSCH or PUSCH. Therefore, how to use UL sub-band resources for repeated PUSCH transmission or PUSCH transmission across slots is a technical problem that needs to be solved. In addition, in the sub-band full-duplex scenario, when availableSlotCounting is configured, whether the symbol/slot corresponding to the UL sub-band is used as an available symbol (available symbol)/ slot is also a problem that needs to be considered.

To this end, in an embodiment of the present disclosure, the terminal may determine the valid resource type of at least one transmission according to the resource type indication information and/or the information of the first transmission in at least one transmission scheduled by the network device. The network device may schedule the at least one transmission via DCI or RRC.

In one embodiment of the present disclosure, the terminal may determine the valid resource type of the at least one transmission according to the resource type indication information.

According to the description of the foregoing embodiments, whether for PUSCH transmission, PUCCH transmission or PDSCH transmission, in the embodiments disclosed herein, the types of transmission resources are divided into the first type, the second type and the third type. The difference is that in different transmissions, the meanings of each type may be different.

For PUSCH transmission or PUCCH transmission, the first type includes the slot or symbol corresponding to the UL sub-band, the second type includes the flexible symbol, and the third type of resource includes all uplink slots or symbols within the BWP or carrier or band frequency domain. For PDSCH transmission, the first type includes the slot or symbol corresponding to the DL sub-band, the second type includes the flexible symbol, and the third type includes all downlink slots or symbols within the BWP or carrier or band frequency domain.

However, no matter what type of transmission is used, there are at most 7 different combinations of the three types:
Type 1;
Type 2;
Type 3;
Type 1 and Type 2;
Type 1 and Type 3;
Type 2 and Type 3;
Type 1, Type 2 and Type 3.

In the embodiment, the terminal can determine that at least two types or type combinations in the above combination are valid resource types through the resource type indication information. For example, the resource type indication information can indicate that at least two of the above 7 different types or type combinations are valid resource types through M (M is an integer, M<=7) different bit states.

When the network device is configured with availableSlotCounting, the resource corresponding to the valid resource type is used as available symbol / slot.

Assuming that there are 7 combinations corresponding to the three types, 3 bits are needed to indicate the resource type indication information. Among them, 7 of the 8 bit states corresponding to the 3 bits indicate the following 7 states:
The first type is the valid resource type;
The second type is the valid resource type;
The third type is the valid resource type;
The first and second types are valid resource types;
The first and third types are valid resource types;
The second and third types are valid resource types;
The first type, the second type, and the third type are valid resource types.

For example, if the bit state corresponding to the 3 bits is 000, the first type is a valid resource type for multiple transmissions; if the bit state corresponding to the 3 bits is 001, the second type is a valid resource type for multiple transmissions; if the bit state corresponding to the 3 bits is 010, the third type is a valid resource type for multiple transmissions; if the bit state corresponding to the 3 bits is 011, the first type and the second type are valid resource types for multiple transmissions; if the bit state corresponding to the 3 bits is 100, the first type and the third type are valid resource types for multiple transmissions; if the bit state corresponding to the 3 bits is 101, the second type and the third type are valid resource types for multiple transmissions; if the bit state corresponding to the 3 bits is 110, the first type, the second type and the third type are valid resource types for multiple transmissions.

In one embodiment of the present disclosure, the terminal may determine the valid resource type of at least one transmission according to information of the first transmission among at least one transmission scheduled by the network device.

The information of the first transmission in at least one transmission mainly refers to the position of the first transmission in at least one transmission. If the position of the first transmission in at least one transmission is on a resource of the first type, then the first type is a valid resource type; if the position of the first transmission in at least one transmission is on a resource of the second type, then the second type is a valid resource type; if the position of the first transmission in at least one transmission is on a resource of the third type, then the third type is a valid resource type.

In this way, the valid resource type is mainly determined by the protocol agreement. Specifically, according to the protocol agreement, when the transmission resource type corresponding to the position of the first transmission is the first type, the second type, and the third type, the corresponding valid resource type of the remaining transmission can be determined. That is, the terminal determines the valid resource type of the remaining transmission according to the type of the transmission resource of the first transmission.

In this embodiment, when the terminal determines that the location of the first or first transmission scheduled by the DCI/RRC is on the first type of resource, the first type, the first type and the second type, the first type, the second type and the third type, or the first type and the third type are valid resource types. If the network device enables availableSlotCounting, then the resources of the above valid resource types are available resources.

When the terminal determines that the location of the first or first transmission scheduled by DCI/RRC is on the second type of resource, the second type, the second type and the third type, the first type, the second type and the third type, or the second type and the first type are valid resource types. If the network device enables availableSlotCounting, then the resources of the above valid resource types are available resources.

When the terminal determines that the location of the first or first transmission scheduled by DCI/RRC is on the third type of resource, the third type, the third type and the second type, the first type, the second type and the third type, or the third type and the first type are valid resource types. If the network device enables availableSlotCounting, then the resources of the above valid resource types are available resources.

In one embodiment of the present disclosure, the terminal may determine the valid resource type of at least one transmission according to the resource type indication information and the information of the first transmission of at least one transmission scheduled by the network device.

In one embodiment, the resource type indication information is indicated by 1 bit. The information of the first transmission in the at least one transmission mainly refers to the position of the first transmission in the at least one transmission.
1. If the first or first transmission location is on the first type of resource, that is, the first type is a valid resource type:
   if the resource type indication information indicates 0, the first type is a valid resource type; if the resource type indication information indicates 1, the first type, the second type and the third type, or the first type and the second type, or the first type and the third type are valid resource types; or,
   if the resource type indication information indicates 0, the first type and the second type are valid resource types; if the resource type indication information indicates 1, the first type, the second type and the third type, or the first type and the third type, or the first type are valid resource types; or
   if the resource type indication information indicates 0, the first type and the third type are valid resource types; if the resource type indication information indicates 1, the first type, the second type and the third type, or the first type and the second type, or the first type are valid resource types; or
   if the resource type indication information indicates 0, the first type, the second type and the third type are valid resource types; if the resource type indication information indicates 1, the first type and the third type, or the first type and the second type, or the first type are valid resource types.
2. If the location of the first or first transmission is on a resource of the second type, that is, the second type is a valid resource type:
   if the resource type indication information indicates 0, the second type and the third type are valid resource types; if the resource type indication information indicates 1, the first type, the second type and the third type, or the second type, or the second type and the first type are valid resource types; or
   if the resource type indication information indicates 0, the second type is a valid resource type; if the resource type indication information indicates 1, the first type, the second type and the third type, or the second type and the third type, or the second type and the first type are valid resource types; or
   if the resource type indication information indicates 0, the second type and the first type are valid resource types; if the resource type indication information indicates 1, the first, second and third types, or the second type, or the second type and the third type are valid resource types; or
   if the resource type indication information indicates 0, the first, second and third types are valid resource types; if the resource type indication information indicates 1, the second type and the third type, or the second type, or the second type and the first type are valid resource types.
3. If the location of the first or first transmission is on the third type of resource, that is, the third type is a valid resource type:
   If the resource type indication information indicates 0, the second type and the third type are valid resource types; if the resource type indication information indicates 1, the first type, the second type and the third type are valid resource types; or,
   if the resource type indication information indicates 0, the first type, the second type and the third type are valid resource types; if the resource type indication information indicates 1, the second type and the third type, or the third type, or the third type and the first type are valid resource types; or
   if the resource type indication information indicates 0, the third type is a valid resource type; if the resource type indication information indicates 1, the first type, the second type and the third type, or the second type and the third type, or the second type and the third type are valid resource types; or
   if the resource type indication information indicates 0, the first type and the third type are valid resource types; if the resource type indication information indicates 1, the first type, the second type and the third type, or the third type, or the second type and the third type are valid resource types.

In the above cases, if the network device enables availableSlotCounting, then the resources corresponding to the above valid resource types are available resources.

In one implementation, the resource type indication information is indicated by 2 bits. The information of the first transmission in the at least one transmission mainly refers to the position of the first transmission in the at least one transmission.
1. If the first or first transmission location is on the first type of resource, that is, the first type is a valid resource type:
   if the resource type indication information indicates 00, the first type is a valid resource type;
   if the resource type indication information indicates 01, the first type and the second type are valid resource types;
   if the resource type indication information indicates 10, the first type, the second type and the third type are valid resource types;
   if the resource type indication information indicates 11, the first type and the third type are valid resource types.
2. If the location of the first or first transmission is on a resource of the second type, that is, the second type is a valid resource type:
   if the resource type indication information indicates 00, the second type is a valid resource type;
   if the resource type indication information indicates 01, the first type and the second type are valid resource types;
   if the resource type indication information indicates 10, the first type, the second type and the third type are valid resource types;
   if the resource type indication information indicates 11, the second type and the third type are valid resource types.
3. If the location of the first or first transmission is on the resource of the third resource, that is, the third type is a valid resource type:
   if the resource type indication information indicates 00, the third type is a valid resource type;
   if the resource type indication information indicates 01, the third type and the second type are valid resource types;
   if the resource type indication information indicates 10, the first type, the second type and the third type are valid resource types;
   if the resource type indication information indicates 11, the third type and the first type are valid resource types.

In the above cases, if the network device enables availableSlotCounting, then the resources of the above valid resource types are available resources.

It can be seen from the above embodiments that the scheme of the embodiment of the present disclosure can effectively and flexibly utilize UL/DL sub-band resources to perform TB transmission or retransmission across at least one PDSCH or PUSCH. Moreover, when configuring availableSlotCounting, the scheme of the embodiment of the present disclosure can also determine the available symbol / slot.

The solution provided by the embodiments of the present disclosure can be applied to a variety of systems, especially the fifth generation mobile communication technology (5G) system. For example, the applicable system can be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, an advanced long term evolution (LTE-A) system, a universal mobile telecommunication system (UMTS), a world-wide interoperability for microwave access (WiMAX) system, a 5G new radio (NR) system, etc. These various systems include terminal devices and network devices. The system may also include core network parts, such as the Evolved Packet System (EPS), 5G System (5G System, 5GS), etc.

The terminal device of the present disclosure may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or at least one core network (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a wireless access network. For example, personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, but is not limited in the embodiments of the present disclosure.

The network device of the present disclosure may be a base station, which may include at least one cell providing services for a terminal. Depending on the specific application scenario, the base station may also be called an access point, or may be a device in an access network that communicates with a wireless terminal device through one or at least one sector on an air interface, or may be another name. The network device may be used to interchange received air frames with Internet Protocol (IP) packets, and serve as a router between the wireless terminal device and the rest of the access network, where the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolutionary network device (eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be arranged geographically separately.

Network devices and terminal devices can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be two-dimensional MIMO antennas (2D-MIMO), three-dimensional MIMO antennas (3D-MIMO), full-dimensional MIMO antennas (FD-MIMO), or massive MIMO antennas (massive-MIMO). It can also be diversity transmission, precoded transmission, or beamforming transmission.

As shown in FIG3, the information processing apparatus of the embodiment of the present disclosure is applied to a network device, including: a processor 300, configured to read the computer program in the memory to perform:
determining, according to target information, a valid resource type of at least one transmission scheduled by a network device, where the target information includes:
indication information of a resource type, and/or
type information of a transmission resource of a first transmission in the at least one transmission scheduled by the network device.

The transceiver 310 is configured to receive and send data under the control of the processor 300.

In FIG. 3, the bus architecture may include any number of interconnected buses and bridges, specifically one or more processors represented by processor 300 and various circuits of memory represented by memory 320 are linked together. The bus architecture may also link together various other circuits such as peripherals, voltage regulators, and power management circuits, which are well known in the art and are therefore not further described herein. The bus interface provides an interface. The transceiver 310 may be a plurality of components, including a transmitter and a receiver, providing a unit for communicating with various other devices on a transmission medium. The processor 300 is responsible for managing the bus architecture and general processing, and the memory 320 may store data used by the processor 300 when performing operations.

The processor 300 may be a central processing unit (CPU), an application specific integrated circuit (ASIC), a field programmable gate array (FPGA) or a complex programmable logic device (CPLD). The processor may also adopt a multi-core architecture.

The processor 300 is responsible for managing the bus architecture and general processing, and the memory 320 can store data used by the processor 300 when performing operations.

Optionally, the at least one transmission includes:
physical uplink shared channel (PUSCH) retransmission;
physical uplink control channel (PUCCH) retransmission;
physical downlink shared channel (PDSCH) retransmission;
configured grant Type 1 PUSCH transmission;
configured grant Type 2 PUSCH transmission;
transport block (TB) transmitted across at least one PDSCH or PUSCH.

Optionally, the type of the transmission resource includes:
a first type, where the first type of resource includes a slot or symbol corresponding to an uplink (UL) sub-band and/or a slot or symbol corresponding to a downlink (DL) sub-band;
a second type, where the second type of resource includes a flexible symbol;
a third type, where the third type of resource includes all uplink slots or symbols within a frequency domain rang of a bandwidth part (BWP) or a carrier or a band, and/or all downlink slots or symbols within a frequency domain rang of a BWP or a carrier or a band.

Optionally, the processor 300 is further configured to read the computer program in the memory to perform:
taking at least two types or a combination of the first type, the second type and the third type as the valid resource type;
determining the target information according to the valid resource type, where the target information includes resource type indication information configured to indicate the valid resource type.

Optionally, the processor 300 is further configured to read the computer program in the memory to perform:
determining a type of the transmission resource for the first transmission of the at least one transmission;
determining the valid resource type according to the type of the transmission resource of the first transmission of the at least one transmission;
determining the target information according to the type of the transmission resource of the first transmission in the at least one transmission, and the target information includes type information of the transmission resource of the first transmission in the at least one scheduled transmission.

Optionally, the processor 300 is further configured to read the computer program in the memory to perform:
determining a type of transmission resource for a first transmission of the at least one transmission;
determining a selectable type set according to the type of the transmission resource of the first transmission in the at least one transmission, where the selectable type set includes the type of the transmission resource of the first transmission in the at least one transmission;
determining the valid resource type according to the selectable type set;
determining the target information based on the type of transmission resources of the first transmission in the at least one transmission and the valid resource type, and the target information includes: resource type indication information configured to indicate the valid resource type, and type information of the transmission resources of the first transmission in the at least one scheduled transmission.

Optionally, the processor 300 is further configured to read the computer program in the memory to perform:
sending the target information to the terminal.

It should be noted here that the above-mentioned device provided in the embodiment of the present disclosure can implement all the method steps implemented by the network device in the above-mentioned method embodiment, and can achieve the same technical effect. The parts and beneficial effects of this embodiment that are the same as the method embodiment will not be described in detail here.

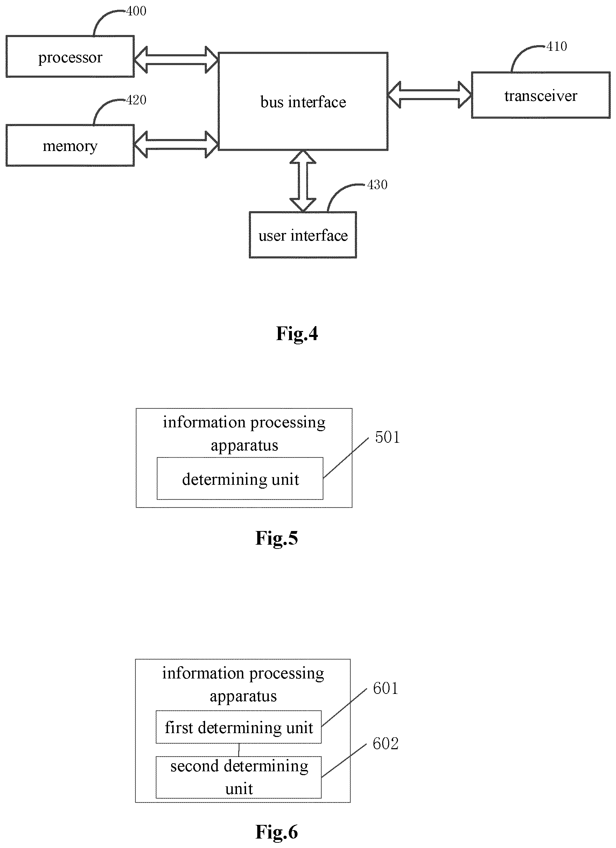

As shown in FIG.4, the information processing apparatus of the embodiment of the present disclosure is applied to a terminal, and includes: a processor 400, which is used to read the program in the memory 420 and execute the following process:
determining, according to target information, a valid resource type of at least one transmission scheduled by a network device, where the target information includes:
indication information of a resource type, and/or
type information of a transmission resource of a first transmission in the at least one transmission scheduled by the network device.

The transceiver 410 is configured to receive and send data under the control of the processor 400.

In Figure 4, the bus architecture may include any number of interconnected buses and bridges, specifically one or more processors represented by processor 400 and various circuits of memory represented by memory 420 are linked together. The bus architecture can also link various other circuits such as peripherals, voltage regulators, and power management circuits together, which are all well known in the art and are therefore not further described herein. The bus interface provides an interface. The transceiver 410 can be a plurality of components, namely, a transmitter and a receiver, providing a unit for communicating with various other devices on a transmission medium. For different user devices, the user interface 430 can also be an interface that can be connected to external or internal devices, and the connected devices include but are not limited to keypads, displays, speakers, microphones, joysticks, etc.

The processor 400 is responsible for managing the bus architecture and general processing, and the memory 420 can store data used by the processor 400 when performing operations.

The processor 400 may be a central processing unit (CPU), an application specific integrated circuit (ASIC), a field programmable gate array (FPGA) or a complex programmable logic device (CPLD), and the processor may also adopt a multi-core architecture.
execute any of the methods provided by the embodiments of the present disclosure according to the obtained executable instructions. The processor and the memory can also be arranged physically separately.

Optionally, the at least one transmission includes:
physical uplink shared channel (PUSCH) retransmission;
physical uplink control channel (PUCCH) retransmission;
physical downlink shared channel (PDSCH) retransmission;
configured grant Type 1 PUSCH transmission;
configured grant Type 2 PUSCH transmission;
transport block (TB) transmitted across at least one PDSCH or PUSCH.

Optionally, the type of the transmission resource includes:
a first type, where the first type of resource includes a slot or symbol corresponding to an uplink (UL) sub-band and/or a slot or symbol corresponding to a downlink (DL) sub-band;
a second type, where the second type of resource includes a flexible symbol;
a third type, where the third type of resource includes all uplink slots or symbols within a frequency domain rang of a bandwidth part (BWP) or a carrier or a band, and/or all downlink slots or symbols within a frequency domain rang of a BWP or a carrier or a band.

Optionally, the target information includes resource type indication information; and the processor 400 is further configured to read the computer program in the memory to perform:
taking a type of transmission resource indicated by the resource type indication information as the valid resource type, where the type of transmission resource indicated by the resource type indication information includes at least two types or a combination of the first type, the second type and the third type.

Optionally, the target information includes the type information of the transmission resource of the first transmission in the at least one transmission scheduled by the network device; and the processor 400 is further configured to read the computer program in the memory to perform:
determining, according to the type information of the transmission resource of the first transmission in the at least one transmission, the valid resource type corresponding to other transmissions.

Optionally, the target information includes resource type indication information and the type information of transmission resource of the first transmission in at least one transmission scheduled by the network device; and the processor 400 is further configured to read the computer program in the memory to perform:
determining, according to the type information of the transmission resource of the first transmission in the at least one transmission and the resource type indication information, the valid resource type corresponding to other transmissions.

Optionally, the processor 400 is further configured to read the computer program in the memory to perform:
the valid resource types corresponding to the other transmissions including the type of transmission resource of the first transmission in the at least one transmission.

Optionally, the processor 400 is further configured to read the computer program in the memory to perform:
determining the valid resource type corresponding to other transmissions according to a bit state corresponding to the resource type indication information and the type information of the transmission resource of the first transmission.

Optionally, the resource type indication information is carried through a radio resource control (RRC) configuration, or indicated through a media access control (MAC) control element (CE), or carried in an uplink grant (UL grant) for scheduling transmission, or carried in a DCI for scheduling uplink/downlink transmission.

It should be noted here that the above-mentioned device provided in the embodiment of the present disclosure can implement all the method steps implemented by the terminal in the above-mentioned method embodiment, and can achieve the same technical effect. The parts and beneficial effects that are the same as those in the method embodiment will not be described in detail here.

As shown in FIG.5, the information processing apparatus of an embodiment of the present disclosure, applied to a terminal, includes:
a determining unit 501, configured to determine, according to target information, a valid resource type of at least one transmission scheduled by a network device, where the target information includes:
indication information of a resource type, and/or
type information of a transmission resource of a first transmission in the at least one transmission scheduled by the network device.

Optionally, the at least one transmission includes:
physical uplink shared channel (PUSCH) retransmission;
physical uplink control channel (PUCCH) retransmission;
physical downlink shared channel (PDSCH) retransmission;
configured grant Type 1 PUSCH transmission;
configured grant Type 2 PUSCH transmission;
transport block (TB) transmitted across at least one PDSCH or PUSCH.

Optionally, the type of the transmission resource includes:
a first type, where the first type of resource includes a slot or symbol corresponding to an uplink (UL) sub-band and/or a slot or symbol corresponding to a downlink (DL) sub-band;
a second type, where the second type of resource includes a flexible symbol;
a third type, where the third type of resource includes all uplink slots or symbols within a frequency domain rang of a bandwidth part (BWP) or a carrier or a band, and/or all downlink slots or symbols within a frequency domain rang of a BWP or a carrier or a band.

Optionally, the target information includes resource type indication information; and the determining unit 501 is further configured to perform:
taking a type of transmission resource indicated by the resource type indication information as the valid resource type, where the type of transmission resource indicated by the resource type indication information includes at least two types or a combination of the first type, the second type and the third type.

Optionally, the target information includes the type information of the transmission resource of the first transmission in the at least one transmission scheduled by the network device; and the determining unit 501 is further configured to perform:
determining, according to the type information of the transmission resource of the first transmission in the at least one transmission, the valid resource type corresponding to other transmissions.

Optionally, the target information includes resource type indication information and the type information of transmission resource of the first transmission in at least one transmission scheduled by the network device; and the determining unit 501 is further configured to perform:
determining, according to the type information of the transmission resource of the first transmission in the at least one transmission and the resource type indication information, the valid resource type corresponding to other transmissions.

Optionally, the resource type indication information is carried through a radio resource control (RRC) configuration, or indicated through a media access control (MAC) control element (CE), or carried in an uplink grant (UL grant) for scheduling transmission, or carried in a DCI for scheduling uplink/downlink transmission.

It should be noted here that the above-mentioned device provided in the embodiment of the present disclosure can implement all the method steps implemented by the terminal in the above-mentioned method embodiment, and can achieve the same technical effect. The parts and beneficial effects that are the same as those in the method embodiment will not be described in detail here.

As shown in FIG.6, the information processing apparatus of an embodiment of the present disclosure is applied to a network device, including:
a first determining unit 601, configured to determine a valid resource type for at least one scheduled transmission;
a second determining unit, configured to determine a valid resource type for at least one scheduled transmission;
determining target information;

Optionally, the at least one transmission includes:
physical uplink shared channel (PUSCH) retransmission;
physical uplink control channel (PUCCH) retransmission;
physical downlink shared channel (PDSCH) retransmission;
configured grant Type 1 PUSCH transmission;
configured grant Type 2 PUSCH transmission;
transport block (TB) transmitted across at least one PDSCH or PUSCH.

Optionally, the type of the transmission resource includes:
a first type, where the first type of resource includes a slot or symbol corresponding to an uplink (UL) sub-band and/or a slot or symbol corresponding to a downlink (DL) sub-band;
a second type, where the second type of resource includes a flexible symbol;
a third type, where the third type of resource includes all uplink slots or symbols within a frequency domain rang of a bandwidth part (BWP) or a carrier or a band, and/or all downlink slots or symbols within a frequency domain rang of a BWP or a carrier or a band.

Optionally, the first determining unit 601 is further configured to perform:
taking at least two types or a combination of the first type, the second type and the third type as the valid resource type;
the second determining unit 602 is further configured to perform:
determining the target information according to the valid resource type, where the target information includes resource type indication information configured to indicate the valid resource type.

Optionally, the determining the valid resource type for at least one scheduled transmission includes:
determining a type of the transmission resource for the first transmission of the at least one transmission;
determining the valid resource type according to the type of the transmission resource of the first transmission of the at least one transmission;
the second determining unit 602 is further configured to perform determing the target information according to the type of the transmission resource of the first transmission in the at least one transmission, and the target information includes type information of the transmission resource of the first transmission in the at least one scheduled transmission.

Optionally, the determining the valid resource type for at least one scheduled transmission includes:
determining a type of transmission resource for a first transmission of the at least one transmission;
determining a selectable type set according to the type of the transmission resource of the first transmission in the at least one transmission, where the selectable type set includes the type of the transmission resource of the first transmission in the at least one transmission;
determining the valid resource type according to the selectable type set;
the second determining unit 602 is further configured to perform determining the target information based on the type of transmission resources of the first transmission in the at least one transmission and the valid resource type, and the target information includes: resource type indication information configured to indicate the valid resource type, and type information of the transmission resources of the first transmission in the at least one scheduled transmission.

Optionally, the apparatus further includes:
a first sending unit, configured to send the target information to the terminal.

It should be noted here that the above-mentioned device provided in the embodiment of the present disclosure can implement all the method steps implemented by the network device in the above-mentioned method embodiment, and can achieve the same technical effect. The parts and beneficial effects of this embodiment that are the same as the method embodiment will not be described in detail here.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes: U disk, mobile hard disk, read-only memory (ROM), random access memory (RAM), disk or optical disk, etc. Various media that can store program codes.

The embodiment of the present disclosure also provides a processor-readable storage medium, on which a program is stored. When the program is executed by the processor, each process of the above-mentioned information processing method embodiment is implemented, and the same technical effect can be achieved. To avoid repetition, it is not repeated here. Among them, the readable storage medium can be any available medium or data storage device that the processor can access, including but not limited to magnetic storage (such as floppy disk, hard disk, tape, magneto -optical (MO), etc.), optical storage (such as laser disc (Compact Disk, CD), digital versatile disc (Digital Versatile Disc, DVD), Blu-ray Disc (Blu-ray Disc, BD), high-definition universal disc (High-Definition Versatile Disc, HVD), etc.), and semiconductor memory (such as ROM, Erasable Programmable Read-Only Memory (Erasable Programmable Read-Only Memory, EPROM), Electrically Erasable Programmable Read Only Memory (EEPROM), non-volatile memory (NAND FLASH), solid- state drive (SSD), etc.

It should be noted that, in this article, the terms "include", "includes" or any other variations thereof are intended to cover non-exclusive inclusion, so that a process, method, article or device including a series of elements includes not only those elements, but also other elements not explicitly listed, or also includes elements inherent to such process, method, article or device. In the absence of further restrictions, an element defined by the sentence "includes a..." does not exclude the existence of other identical elements in the process, method, article or device including the element.

Through the description of the above implementation methods, those skilled in the art can clearly understand that the above-mentioned embodiment methods can be implemented by means of software plus a necessary general hardware platform, and of course by hardware, but in many cases the former is a better implementation method. Based on such an understanding, the technical solution of the present disclosure, or the part that contributes to the relevant technology, can be embodied in the form of a software product, which is stored in a storage medium (such as ROM/RAM, disk, CD), and includes a number of instructions for a terminal (which can be a mobile phone, computer, server, air conditioner, or network device, etc.) to execute the methods described in each embodiment of the present disclosure.

The present disclosure are described above in conjunction with the accompanying drawings, but the present disclosure is not limited to the above-mentioned specific implementation methods. The above-mentioned specific implementation methods are merely illustrative and not restrictive. Under the guidance of the present disclosure, ordinary technicians in this field can also make many forms without departing from the scope of protection of the purpose of the present disclosure and the claims, all of which are within the protection of the present disclosure.

## Claims

1. An information processing method, applied to a terminal, comprising:
determining, according to target information, a valid resource type of at least one transmission scheduled by a network device, wherein the target information comprises:
indication information of a resource type, and/or
type information of a transmission resource of a first transmission in the at least one transmission scheduled by the network device.

2. The method according to claim 1, wherein the at least one transmission comprises:
physical uplink shared channel (PUSCH) retransmission;
physical uplink control channel (PUCCH) retransmission;
physical downlink shared channel (PDSCH) retransmission;
configured grant Type 1 PUSCH transmission;
configured grant Type 2 PUSCH transmission;
transport block (TB) transmitted across at least one PDSCH or PUSCH.

3. The method according to claim 1, wherein the type of the transmission resource comprises:
a first type, wherein the first type of resource comprises a slot or symbol corresponding to an uplink (UL) sub-band and/or a slot or symbol corresponding to a downlink (DL) sub-band;
a second type, wherein the second type of resource comprises a flexible symbol;
a third type, wherein the third type of resource comprises all uplink slots or symbols within a frequency domain rang of a bandwidth part (BWP) or a carrier or a band, and/or all downlink slots or symbols within a frequency domain rang of a BWP or a carrier or a band.

4. The method according to claim 3, wherein the target information comprises resource type indication information; and the determining the valid resource type of at least one transmission scheduled by the network device according to the target information comprises:
taking a type of transmission resource indicated by the resource type indication information as the valid resource type, wherein the type of transmission resource indicated by the resource type indication information comprises at least two types or a combination of the first type, the second type and the third type.

5. The method according to claim 3, wherein the target information comprises the type information of the transmission resource of the first transmission in the at least one transmission scheduled by the network device; and the determining the valid resource type of at least one transmission scheduled by the network device according to the target information comprises:
determining, according to the type information of the transmission resource of the first transmission in the at least one transmission, the valid resource type corresponding to other transmissions.

6. The method according to claim 3, wherein the target information comprises resource type indication information and the type information of transmission resource of the first transmission in at least one transmission scheduled by the network device; and the determining the valid resource type of at least one transmission scheduled by the network device according to the target information comprises:
determining, according to the type information of the transmission resource of the first transmission in the at least one transmission and the resource type indication information, the valid resource type corresponding to other transmissions.

7. The method according to claim 5, wherein the determining the valid resource types corresponding to other transmissions according to the type information of the transmission resource of the first transmission in the at least one transmission comprises:
the valid resource types corresponding to the other transmissions comprising the type of transmission resource of the first transmission in the at least one transmission.

8. The method according to claim 6, wherein the determining the valid resource types corresponding to other transmissions according to the type information of the transmission resource of the first transmission in the at least one transmission and the resource type indication information comprises:
determining the valid resource type corresponding to other transmissions according to a bit state corresponding to the resource type indication information and the type information of the transmission resource of the first transmission.

9. The method according to claim 1, wherein the resource type indication information is carried through a radio resource control (RRC) configuration, or indicated through a media access control (MAC) control element (CE), or carried in an uplink grant (UL grant) for scheduling transmission, or carried in a DCI for scheduling uplink/downlink transmission.

10. An information processing method, applied to a network device, comprising:
determining a valid resource type for at least one scheduled transmission;
determining target information;
wherein the target information comprises:
indication information of a resource type, and/or
type information of a transmission resource of a first transmission in the at least one transmission scheduled by the network device.

11. The method according to claim 10, wherein the at least one transmission comprises:
physical uplink shared channel (PUSCH) retransmission;
physical uplink control channel (PUCCH) retransmission;
physical downlink shared channel (PDSCH) retransmission;
configured grant Type 1 PUSCH transmission;
configured grant Type 2 PUSCH transmission;
transport block (TB) transmitted across at least one PDSCH or PUSCH.

12. The method according to claim 10, wherein the type of the transmission resource comprises:
a first type, wherein the first type of resource comprises a slot or symbol corresponding to an uplink (UL) sub-band and/or a slot or symbol corresponding to a downlink (DL) sub-band;
a second type, wherein the second type of resource comprises a flexible symbol;
a third type, wherein the third type of resource comprises all uplink slots or symbols within a frequency domain rang of a bandwidth part (BWP) or a carrier or a band, and/or all downlink slots or symbols within a frequency domain rang of a BWP or a carrier or a band.

13. The method according to claim 12, wherein the determining the valid resource type for at least one scheduled transmission comprises:
taking at least two types or a combination of the first type, the second type and the third type as the valid resource type;
the determining the target information comprises:
determining the target information according to the valid resource type, wherein the target information comprises resource type indication information configured to indicate the valid resource type.

14. The method according to claim 12, wherein determining the valid resource type for at least one scheduled transmission comprises:
determining a type of the transmission resource for the first transmission of the at least one transmission;
determining the valid resource type according to the type of the transmission resource of the first transmission of the at least one transmission;
the determining target information comprises:
determing the target information according to the type of the transmission resource of the first transmission in the at least one transmission, and the target information comprises type information of the transmission resource of the first transmission in the at least one scheduled transmission.

15. The method according to claim 12, wherein the determining the valid resource type for at least one scheduled transmission comprises:
determining a type of transmission resource for a first transmission of the at least one transmission;
determining a selectable type set according to the type of the transmission resource of the first transmission in the at least one transmission, wherein the selectable type set comprises the type of the transmission resource of the first transmission in the at least one transmission;
determining the valid resource type according to the selectable type set;
the determining the target information comprises:
determining the target information based on the type of transmission resources of the first transmission in the at least one transmission and the valid resource type, and the target information comprises: resource type indication information configured to indicate the valid resource type, and type information of the transmission resources of the first transmission in the at least one scheduled transmission.

16. The method according to claim 12, further comprising:
sending the target information to the terminal.

17. An information processing apparatus, applied to a terminal, comprising:
a determining unit, configured to determine, according to target information, a valid resource type of at least one transmission scheduled by a network device, wherein the target information comprises:
indication information of a resource type, and/or
type information of a transmission resource of a first transmission in the at least one transmission scheduled by the network device.

18. The apparatus according to claim 17, wherein the at least one transmission comprises:
physical uplink shared channel (PUSCH) retransmission;
physical uplink control channel (PUCCH) retransmission;
physical downlink shared channel (PDSCH) retransmission;
configured grant Type 1 PUSCH transmission;
configured grant Type 2 PUSCH transmission;
transport block (TB) transmitted across at least one PDSCH or PUSCH.

19. The apparatus according to claim 17, wherein the type of the transmission resource comprises:
a first type, wherein the first type of resource comprises a slot or symbol corresponding to an uplink (UL) sub-band and/or a slot or symbol corresponding to a downlink (DL) sub-band;
a second type, wherein the second type of resource comprises a flexible symbol;
a third type, wherein the third type of resource comprises all uplink slots or symbols within a frequency domain rang of a bandwidth part (BWP) or a carrier or a band, and/or all downlink slots or symbols within a frequency domain rang of a BWP or a carrier or a band.

20. The device according to claim 19, wherein the target information comprises resource type indication information; and the determining unit is further configured to:
take a type of transmission resource indicated by the resource type indication information as the valid resource type, wherein the type of transmission resource indicated by the resource type indication information comprises at least two types or a combination of the first type, the second type and the third type.

21. An information processing apparatus, applied to a network device, comprising:
a first determining unit, configured to determine a valid resource type for at least one scheduled transmission;
a second determining unit, configured to determine a valid resource type for at least one scheduled transmission;
determining target information;
wherein the target information comprises:
indication information of a resource type, and/or
type information of a transmission resource of a first transmission in the at least one transmission scheduled by the network device.

22. The apparatus according to claim 21, wherein the at least one transmission comprises:
physical uplink shared channel (PUSCH) retransmission;
physical uplink control channel (PUCCH) retransmission;
physical downlink shared channel (PDSCH) retransmission;
configured grant Type 1 PUSCH transmission;
configured grant Type 2 PUSCH transmission;
transport block (TB) transmitted across at least one PDSCH or PUSCH.

23. The apparatus according to claim 21, wherein the type of the transmission resource comprises:
a first type, wherein the first type of resource comprises a slot or symbol corresponding to an uplink (UL) sub-band and/or a slot or symbol corresponding to a downlink (DL) sub-band;
a second type, wherein the second type of resource comprises a flexible symbol;
a third type, wherein the third type of resource comprises all uplink slots or symbols within a frequency domain rang of a bandwidth part (BWP) or a carrier or a band, and/or all downlink slots or symbols within a frequency domain rang of a BWP or a carrier or a band.

24. The device according to claim 23, wherein the first determining unit is further configured to: take at least two types or a combination of the first type, the second type and the third type as the valid resource type;
the second determining unit is further configured to determine the target information according to the valid resource type, wherein the target information comprises resource type indication information configured to indicate the valid resource type.

25. An information processing apparatus, applied to a terminal, comprising: a memory, a transceiver, and a processor:
the memory is configured to store a computer program; the transceiver is configured to send and receive data under a control of the processor; and the processor is configured to read the computer program in the memory to perform:
determining, according to target information, a valid resource type of at least one transmission scheduled by a network device, wherein the target information comprises:
indication information of a resource type, and/or
type information of a transmission resource of a first transmission in the at least one transmission scheduled by the network device.

26. The apparatus according to claim 25, wherein the at least one transmission comprises:
physical uplink shared channel (PUSCH) retransmission;
physical uplink control channel (PUCCH) retransmission;
physical downlink shared channel (PDSCH) retransmission;
configured grant Type 1 PUSCH transmission;
configured grant Type 2 PUSCH transmission;
transport block (TB) transmitted across at least one PDSCH or PUSCH.

27. The apparatus according to claim 25, wherein the type of the transmission resource comprises:
a first type, wherein the first type of resource comprises a slot or symbol corresponding to an uplink (UL) sub-band and/or a slot or symbol corresponding to a downlink (DL) sub-band;
a second type, wherein the second type of resource comprises a flexible symbol;
a third type, wherein the third type of resource comprises all uplink slots or symbols within a frequency domain rang of a bandwidth part (BWP) or a carrier or a band, and/or all downlink slots or symbols within a frequency domain rang of a BWP or a carrier or a band.

28. The device according to claim 27, wherein the target information comprises resource type indication information; and the processor is configured to read the computer program in the memory to perform:
taking a type of transmission resource indicated by the resource type indication information as the valid resource type, wherein the type of transmission resource indicated by the resource type indication information comprises at least two types or a combination of the first type, the second type and the third type.

29. An information processing apparatus, applied to a network device, comprising: a memory, a transceiver, and a processor:
the memory is configured to store a computer program; the transceiver is configured to send and receive data under a control of the processor; and the processor is configured to read the computer program in the memory to perform:
determining a valid resource type for at least one scheduled transmission;
determining target information;
wherein the target information comprises:
indication information of a resource type, and/or
type information of a transmission resource of a first transmission in the at least one transmission scheduled by the network device.

30. The apparatus according to claim 29, wherein the at least one transmission comprises:
physical uplink shared channel (PUSCH) retransmission;
physical uplink control channel (PUCCH) retransmission;
physical downlink shared channel (PDSCH) retransmission;
configured grant Type 1 PUSCH transmission;
configured grant Type 2 PUSCH transmission;
transport block (TB) transmitted across at least one PDSCH or PUSCH.

31. The apparatus according to claim 29, wherein the type of the transmission resource comprises:
a first type, wherein the first type of resource comprises a slot or symbol corresponding to an uplink (UL) sub-band and/or a slot or symbol corresponding to a downlink (DL) sub-band;
a second type, wherein the second type of resource comprises a flexible symbol;
a third type, wherein the third type of resource comprises all uplink slots or symbols within a frequency domain rang of a bandwidth part (BWP) or a carrier or a band, and/or all downlink slots or symbols within a frequency domain rang of a BWP or a carrier or a band.

32. The device according to claim 31, wherein the processor is further configured to read the program to perform:
taking at least two types or a combination of the first type, the second type and the third type as the valid resource type;
the determining the target information comprises:
determining the target information according to the valid resource type, wherein the target information comprises resource type indication information configured to indicate the valid resource type.

33. A processor-readable storage medium, storing a computer program, wherein the computer program is configured to cause the processor to perform the method according to any one according to claims 1 to 16.
